# FASCICULE DE BREVET EUROPEEN

(11) **EP 4 011 769 B1**
(45) Date de publication et mention de la délivrance du brevet: **28.06.2023**
(21) Numéro de dépôt: 21210437.6
(22) Date de dépôt: 25.11.2021
(51) Int. Cl.: B64C 27/10, B64C 27/12

(54) **DISPOSITIF DE PROPULSION POUR AÉRODYNE À VOILURE TOURNANTE ET À DÉCOLLAGE ET ATTERRISSAGE VERTICAUX ET AÉRODYNE ÉQUIPÉ D'UN TEL DISPOSITIF DE PROPULSION**
ANTRIEBSVORRICHTUNG FÜR EIN DREHFLÜGELFLUGZEUG MIT SENKRECHTEM START UND SENKRECHTER LANDUNG UND LUFTFAHRZEUG, DAS MIT EINER SOLCHEN ANTRIEBSVORRICHTUNG AUSGESTATTET IST
PROPULSION DEVICE FOR ROTARY-WING AIRCRAFT WITH VERTICAL TAKE-OFF AND LANDING AND AERODYNE EQUIPPED WITH SUCH A PROPULSION DEVICE

(30) Priorité: 16.12.2020 FR 2013130
(43) Date de publication de la demande: 15.06.2022
(73) Titulaire: NEXTER Systems, 78034 Versailles Cedex (FR)
(72) Inventeur: GAUTIER, Pierre, 18023 BOURGES Cedex (FR)
(74) Mandataire: Cabinet Chaillot

(56) Documents cités:
- WO-A1-2020/219900
- FR-A- 1 202 127
- FR-A1- 3 095 189

## Description

Le domaine technique de l'invention est celui des aérodynes à voilure tournante et à décollage et atterrissage verticaux, et plus spécifiquement celui des aérodynes à propulsion par hélices (ou rotors) coaxiales contrarotatives.

En particulier, la présente invention concerne un dispositif de propulsion par hélices coaxiales contrarotatives et un aérodyne de type drone comprenant au moins un tel dispositif de propulsion.

Dans la présente demande, le terme « propulsion » comprend la sustentation de l'aérodyne, la propulsion en vol en translation dans les directions verticale, longitudinale et latérale, ainsi que le contrôle d'attitude en lacet, roulis et tangage

Il est connu par le brevet FR3095189 un dispositif de propulsion d'aérodyne à hélices coaxiales contrarotatives qui offre par rapport aux dispositifs antérieurs (en particulier ceux connus du brevet FR2980117) une maniabilité améliorée, tout en conservant l'avantage de simplicité procuré par l'absence de systèmes collectifs et cycliques de variation du pas des pales.

Ce dispositif comprend un montage de chaque hélice sur un châssis de telle sorte que seules les hélices sont déplacées autour des axes de lacet, de roulis et de tangage, par l'utilisation d'une liaison rotule à doigt creuse qui relie chaque hélice à une partie rotative qui est située à l'intérieur du châssis.

La liaison rotule à doigt autorise ainsi la rotation de l'hélice associée uniquement autour des axes de roulis et de tangage alors que le reste du dispositif de propulsion reste fixe par rapport à ces axes.

Ce dispositif présente cependant pour inconvénient de comporter de nombreuses pièces, ce qui conduit à des difficultés pour le montage et le démontage et complique la maintenance.

Par ailleurs l'architecture décrite par le brevet FR3095189 comprend de nombreuses tiges de commande pour assurer l'inclinaison des hélices autour des axes de roulis et de tangage : des tiges motorisées associées à des tiges dites miroir pour équilibrer les efforts et à des tiges guides pour assurer le parallélisme des hélices.

Cette architecture est également très complexe et elle entraîne des jeux fonctionnels qui nuisent à la fiabilité de la commande.

C'est le but de l'invention que de proposer un dispositif de propulsion pour aérodyne à voilure tournante ne présentant pas de tels inconvénients.

Ainsi le dispositif de propulsion selon l'invention est de conception simple, compacte et permet de faciliter le démontage et la maintenance de l'aérodyne.

Ainsi l'invention a pour objet un dispositif de propulsion pour aérodyne à voilure tournante et à décollage et atterrissage verticaux, par hélices coaxiales et contrarotatives mobiles en lacet, roulis et tangage, le dispositif de propulsion comprenant :
- un châssis creux et ayant un axe longitudinal qui, en utilisation, est coaxial à l'axe de lacet,
- une hélice supérieure et une hélice inférieure ayant chacune un anneau porte-pales à la périphérie duquel des pales à pas fixe sont fixées ou destinées à être fixées, les hélices étant espacées l'une au-dessus de l'autre selon l'axe de lacet, chaque hélice définissant un disque d'hélice et étant apte à être entraînée en rotation autour d'un axe de rotation qui est perpendiculaire au disque d'hélice et à être inclinée autour de l'axe de roulis et de l'axe de tangage,

- des moyens d'entraînement pour entraîner en rotation chaque hélice autour de son axe de rotation, et
- des moyens de commande d'inclinaison pour incliner les hélices autour de l'axe de roulis et de l'axe de tangage,
- l'anneau porte-pales de chaque hélice étant relié aux moyens d'entraînement par une liaison rotule à doigt, dont le centre est l'intersection du disque d'hélice respectif et de l'axe de lacet et dont l'axe est l'axe de rotation de l'hélice,
le dispositif de propulsion étant caractérisé en ce que les moyens d'entraînement comprennent des moyens moteurs comprenant, pour chaque hélice, un moteur couple dont le rotor est solidaire d'une cage sur laquelle est fixée la rotule sur laquelle pivote l'anneau porte-pales de l'hélice considérée, le stator du moteur couple étant solidaire du châssis.

Avantageusement, la cage pourra être montée rotative sur un support tubulaire solidaire du châssis.

Selon un mode particulier de réalisation, le châssis pourra être divisé en deux boîtiers pouvant être assemblés l'un à l'autre, chaque boîtier étant associé à une hélice distincte, chaque boîtier portant un stator d'un moteur couple et un support tubulaire sur lequel peut tourner une cage entraînant une rotule à doigt entraînant l'hélice associée audit boîtier.

Selon un autre mode de réalisation de l'invention, les moyens de commande d'inclinaison pourront comprendre :
- deux paires de tiges de commande de longueur fixe, qui sont situées entre les hélices, toutes les tiges étant parallèles à l'axe de lacet et les deux tiges d'une même paire étant disposées de façon diamétralement opposées l'une de l'autre par rapport à l'axe de lacet,
- chaque tige étant déplaçable en translation par un dispositif de commande, parallèlement à l'axe de lacet, dans les deux sens, de façon à ce que chaque tige soit apte à appuyer par une extrémité sur un plateau qui est solidaire de l'anneau porte-pales d'une hélice de façon à le faire basculer autour de l'axe de roulis pour une première paire ou de l'axe de tangage pour une seconde paire,
- chaque plateau étant relié à un anneau porte-pales d'une hélice par un roulement permettant de désolidariser en rotation le plateau et l'anneau porte-pales de l'hélice considérée.

Avantageusement, le dispositif de commande de chaque tige pourra être constitué par un écrou qui sera monté pivotant relativement au châssis, la tige portant un filetage et étant freinée ou arrêtée en rotation par rapport au châssis.

Selon un mode de réalisation, les deux tiges d'une même paire pourront être entraînées par une même motorisation qui fera tourner les deux écrous à la même vitesse grâce à un jeu de pignons, la rotation des deux écrous pouvant être dans le même sens avec des tiges filetées en sens inverse ou la rotation des deux écrous pouvant être en sens inverse avec des tiges filetées dans le même sens.

Avantageusement, les jeux de pignons associés aux deux paires de tiges pourront être solidaires d'une même platine horlogère qui formera le fond d'un premier boîtier et portera des piliers formant des axes pour les pignons, le fond du second boîtier portant des trous recevant les piliers du premier boîtier, les deux jeux de pignons se trouvant ainsi disposés dans un logement délimité par les deux boîtiers formant le châssis.

Les motorisations associées aux deux paires de tiges pourront être logées chacune dans un support tubulaire distinct associé à un des boîtiers.

Avantageusement, chaque plateau sur lequel appuient les tiges de commande pourra être relié par des ressorts de rappel au boîtier portant l'hélice associée audit plateau.

L'invention a également pour objet un aérodyne à voilure tournante et à décollage et atterrissage verticaux, dont la propulsion est assurée par un dispositif de propulsion selon un des modes de réalisation précédemment décrits.

L'invention sera mieux comprise à la lecture de la description qui va suivre d'un mode particulier de réalisation, description faite en référence aux dessins annexés et dans lesquels :
[Fig. 1] montre en vue latérale un dispositif de propulsion selon un mode de réalisation de l'invention ;
[Fig. 2] est une vue en coupe longitudinale d'un dispositif de propulsion selon un mode de réalisation de l'invention ;
[Fig. 3] est un vue en perspective d'un boîtier portant les tiges de commande et permettant de visualiser les jeux de pignons ;
[Fig. 4a] montre en vue de dessus le fond d'un premier boîtier portant un jeu de pignons ;
[Fig. 4b] montre en vue de dessus le fond d'un second boîtier portant un jeu de pignons ;
[Fig. 5] est une vue extérieure en perspective du dispositif de propulsion ;
[Fig. 6] est une vue éclatée en perspective montrant les deux anneaux porte pales équipés du rotor de leur motorisation et le châssis assemblé ;
[Fig. 7] est un éclaté montrant l'anneau porte-pales et les différentes pièces formant son moyen d'entraînement ;
[Fig. 8] est un éclaté partiel montrant un support tubulaire et la motorisation de commande d'inclinaison ;
[Fig. 9] est un éclaté partiel montrant les deux boîtiers et les tiges de commande d'inclinaison ;
[Fig. 10] est une vue latérale schématique d'un drone selon la présente invention.

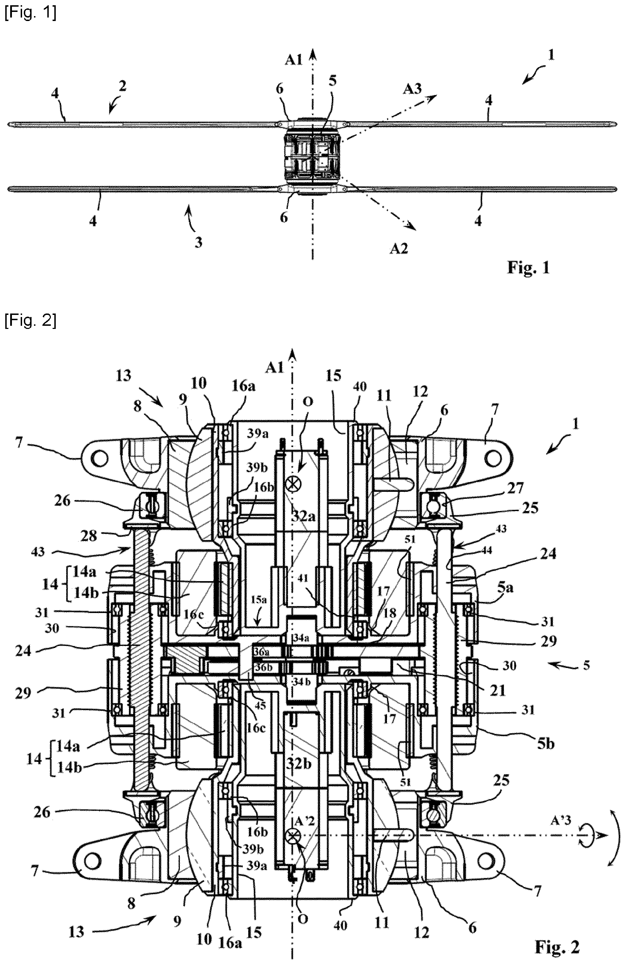

En se reportant à la figure 1, un dispositif de propulsion 1 pour aérodyne à voilure tournante et à décollage et atterrissage verticaux, comporte deux hélices 2 et 3 coaxiales et contrarotatives.

Ces hélices tournent autour d'un axe longitudinal qui est sur la figure 1 confondu avec l'axe de lacet A1 et comprennent chacune deux pales 4 à pas fixe.

Le dispositif de propulsion 1 comprend un châssis creux 5 qui a un axe longitudinal qui, en utilisation, est coaxial à l'axe de lacet A1.

Chaque hélice 2 et 3 comporte un anneau porte-pales 6 à la périphérie duquel les pales 4 sont fixées.

Les deux hélices 2 et 3 sont espacées l'une au-dessus de l'autre selon l'axe de lacet A1. Chaque hélice 2 ou 3 définit un disque d'hélice qui correspond au plan géométrique dans lequel tourne chaque hélice et elle est entraînée en rotation autour d'un axe de rotation qui est perpendiculaire au disque d'hélice. Chaque hélice 2 et 3 peut également être inclinée autour de l'axe de roulis A2 et de l'axe de tangage A3 pour permettre le déplacement de l'aérodyne.

Le dispositif de propulsion 1 comporte des moyens d'entraînement pour entraîner en rotation chaque hélice 2 et 3 autour de son axe de rotation.

Il comporte également des moyens de commande d'inclinaison pour incliner les deux hélices 2 et 3, d'une façon parallèle, et autour de l'axe de roulis A2 et/ou de l'axe de tangage A3.

La figure 2 montre en coupe le dispositif de propulsion 1 selon un mode de réalisation de l'invention.

Sur cette figure les pales 4 sont retirées. On remarque que, sur cette figure, les deux anneaux porte-pales 6 sont orientés de façon identique. Ainsi on voit pour chaque anneau porte-pales 6 les deux bras 7 qui permettent de fixer les pales sur l'anneau porte-pales 6.

On remarque que chaque anneau porte-pales 6 de chaque hélice comporte un logement cylindrique à l'intérieur duquel est fixé, par exemple par montage en force, un siège sphérique 8 qui est destiné à recevoir une portion de sphère 9. Il serait également possible de réaliser l'anneau porte-pales 6 et le siège sphérique 8 d'une seule pièce.

La portion de sphère 9 est elle-même emmanchée sur une cage 10 et par ailleurs une goupille 11 traverse à la fois la cage 10 et la portion de sphère 9 et elle circule dans une rainure 12 réalisée dans le siège sphérique 8.

Ce montage : portion de sphère 9, siège sphérique 8, goupille 11 et rainure 12 constitue une liaison rotule à doigt 13 qui permet de relier l'anneau porte-pales 6 à un moyen d'entraînement 14.

L'entraînement d'une hélice par l'intermédiaire d'une liaison rotule à doigt est déjà décrit dans le brevet FR3095189. La goupille 11 assure la liaison en rotation de l'anneau porte-pales 6 et de la cage 10. L'anneau porte-pales 6 peut osciller autour de l'axe A'3 de la goupille 11 qui est parallèle à l'axe de tangage A3.

Grâce à la rainure 12, l'anneau porte-pales 6 peut aussi pivoter autour d'un axe A'2 qui est parallèle à l'axe de roulis A2 (perpendiculaire aux axes de lacet A1 et de tangage A3). Bien entendu la rotule 13 immobilise en translation l'anneau porte pales 6 et la cage 10.

Les inclinaisons de chaque rotule 13 autour de ses axes A'2 et A'3 étant synchronisées, les axes de roulis A2 et de tangage A3 du dispositif de propulsion 1 sont parallèles aux axes A'2 et A'3 et passent par le centre du dispositif 1 (milieu de la droite reliant les centres O des rotules).

Le centre O de chaque rotule à doigt 13 est l'intersection du disque d'hélice de l'hélice considérée et de l'axe de lacet A1 et l'axe de la rotule 13 est ici l'axe de lacet A1 confondu avec l'axe de la cage 10.

Conformément à l'invention les moyens d'entraînement 14 comprennent des moyens moteurs qui comprennent, pour chaque hélice 2 et 3, un moteur couple 14 (moteur de forme annulaire pour lequel le rotor entraîne directement l'axe sur lequel il est monté) dont le rotor 14a est solidaire de la cage 10 sur laquelle est fixée la rotule 13, le stator 14b du moteur couple étant solidaire du châssis 5.

Les moteurs couples sont bien connus de l'Homme du Métier. Ils présentent l'avantage de fournir un couple important avec un encombrement réduit. Ils associent un rotor réalisé en un matériau formant un aimant permanent et un stator portant les bobinages. Le rotor est désolidarisable du stator pour faciliter le montage.

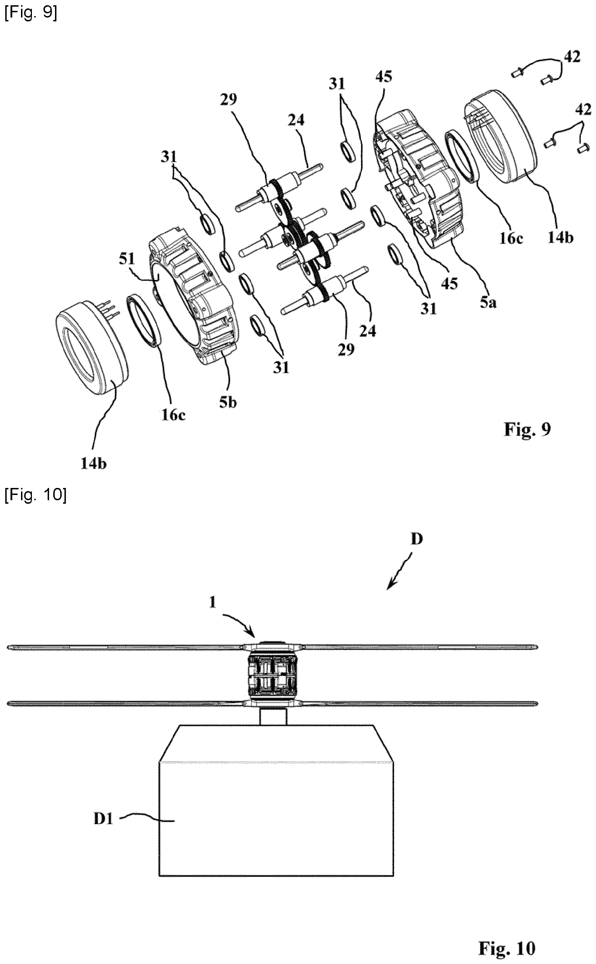

Comme on le voit sur la figure 2 (et la figure 9), le châssis 5 comporte une cavité 51 dans laquelle se positionne le stator 14b. A l'intérieur de cette cavité 51 se met en place également un support tubulaire 15 qui se fixe au châssis 5 par exemple par des vis axiales (non représentées).

Le support tubulaire 15 porte un roulement à billes 16a, sur la bague extérieure duquel se positionne la cage 10 qui porte le rotor 14a.

Par ailleurs le support tubulaire 15 porte un deuxième roulement à billes 16b sur la bague extérieure duquel se positionne aussi la cage 10. Les roulements 16a et 16b sont maintenus par des butées 39a et 39b dont l'une (39a) est solidaire en translation de la cage 10 et l'autre (39b) est solidaire en translation du support tubulaire 15.

On remarque sur la figure 2 qu'un troisième roulement 16c se positionne à l'extérieur de la cage 10 et sa bague externe est ajustée sur une portée 17 du châssis 5.

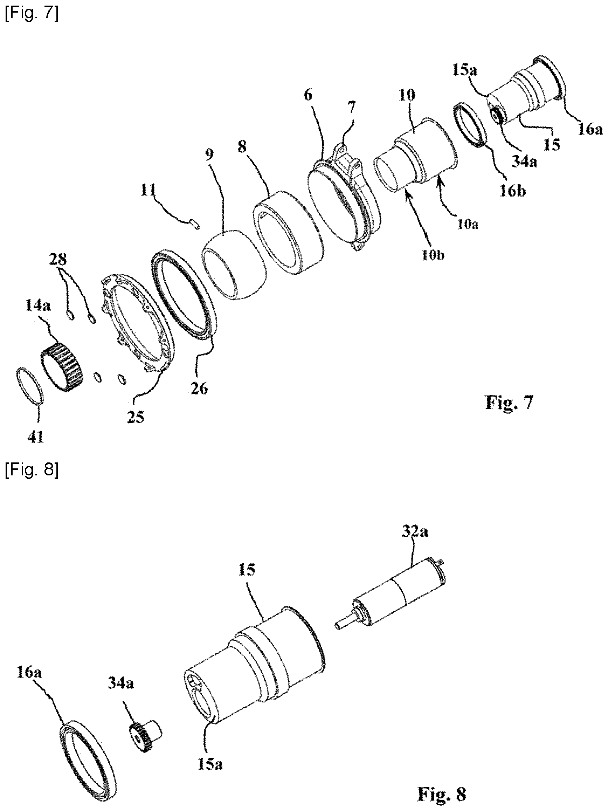

Les figures 7 à 9 permettent de voir les différentes pièces au fur et à mesure de leur assemblage.

On remarque en particulier que la cage 10 comporte une portée de diamètre réduit 10b sur laquelle vient se placer le rotor 14a et le roulement 16c. Comme on le voit à la figure 2, La cage 10 est en butée par un épaulement 40 du support tubulaire 15 sur le roulement 16a et par ailleurs elle est appliquée contre la bague interne du roulement 16c par l'intermédiaire du rotor 14a et d'une entretoise 41. Le rotor 14a étant pincé entre l'entretoise 41 et l'épaulement de la cage 10 qui sépare les portées 10a et 10b.

Donc lorsque le support tubulaire 15 est fixé au châssis 5 (boîtier 5a ou 5b) par des vis (non représentées) traversant sa face avant 15a (figures 7 et 8), la cage 10 se trouve également liée en translation au support tubulaire 15.

Une cale 18 est interposée entre la bague intérieure du roulement 16c et le châssis 5. Cette cale permet de combler les jeux entre le rotor 14a et le roulement 16c. Ainsi la fixation du support tubulaire 15 sur le châssis 5 annulera les jeux.

Comme on le remarque à la figure 2, le montage des moteurs couples 14 est identique pour l'entraînement des deux rotules 13.

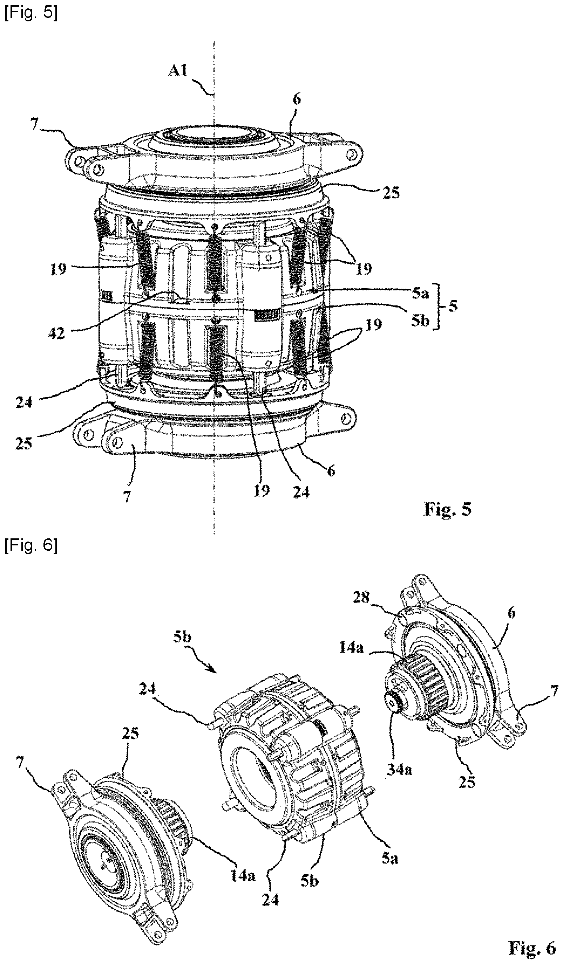

Dans ce mode de réalisation de l'invention, le châssis 5 est donc divisé en deux boîtiers 5a et 5b pouvant être assemblés l'un à l'autre par des vis 42 régulièrement réparties à la périphérie (vis visibles notamment aux figures 5 et 9). Chaque boîtier 5a ou 5b est associé à une hélice 2 ou 3 distincte.

Ainsi chaque boîtier 5a,5b porte un stator 14a d'un moteur couple 14 et un support tubulaire 15 sur lequel peut tourner une cage 10 entraînant une rotule à doigt 13 qui entraîne l'hélice associée audit boîtier 5a ou 5b.

Cette symétrie des boîtiers 5a et 5b simplifie la fabrication car les pièces sont pratiquement identiques au niveau de chaque boîtier. Le montage est également simplifié car chaque boîtier 5a ou 5b peut être équipé individuellement de sa rotule à doigt 13 et de sa motorisation 14. L'assemblage des deux boîtiers complétera l'intégration du dispositif 1.

On remarque par ailleurs que la structure compacte des moteurs couples 14 permet de définir un dispositif peu encombrant et pour lequel le volume interne des supports tubulaires 15 reste disponible.

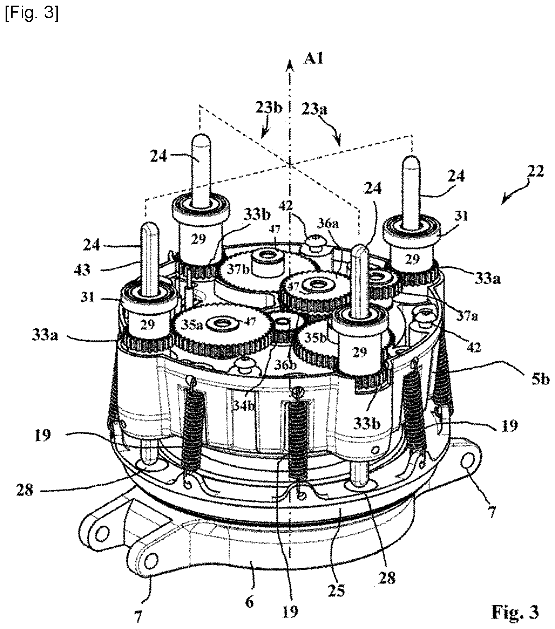

Comme on le voit plus particulièrement sur la figure 3, le dispositif de propulsion comprend des moyens de commande d'inclinaison 22.

Ces moyens comprennent deux paires 23a et 23b de tiges de commande 24 de longueur fixe. Comme on le voit à la figure 2, ces tiges de commande 24 sont situées entre les hélices 2 et 3 et toutes les tiges 24 sont parallèles à l'axe de lacet A1.

Les deux tiges 24 d'une même paire 23a ou 23b sont disposées de façon diamétralement opposées l'une de l'autre par rapport à l'axe de lacet A1 (figure 3).

Chaque tige 24 est déplaçable en translation par un dispositif de commande, parallèlement à l'axe de lacet A1, dans les deux sens, de façon à ce que chaque tige 24 soit apte à appuyer par chaque extrémité sur un plateau 25 qui est solidaire en translation de l'anneau porte-pales 6 d'une hélice 2 ou 3 de façon à le faire basculer autour de l'axe de roulis A2, pour une première paire 23a, ou de l'axe de tangage A3, pour une seconde paire 23b.

Cette configuration diffère donc de façon majeure de celle décrite par la demande de brevet FR3095189 en ce qu'il n'y a plus ici que quatre tiges et que chaque tige agit de façon positive sur les anneaux porte-pales 6. Il n'y a donc plus une tige motrice et une tige miroir, destinée à équilibrer les efforts de la tige motrice, ainsi que des tiges guides, mais uniquement deux tiges motrices pour chaque paire qui agissent toutes deux sur les anneaux porte-pales 6.

Afin d'éviter l'usure des extrémités des tiges 24 par frottement sur les anneaux porte-pales 6, chaque plateau 25 est relié à un anneau porte-pales 6 d'une hélice par un roulement 26 (figure 2) qui permet de désolidariser en rotation le plateau 25 et l'anneau porte-pales 6 de l'hélice considérée.

Comme on le voit en particulier sur la figure 2, le plateau 25 comporte une collerette 27 qui délimite le logement du roulement 26 qui pourra être monté en force ou collé. La bague interne du roulement 26 se positionne sur une portée de l'anneau porte-pales 6 où elle est montée en force ou collée.

On positionnera sur chaque plateau 25 des disques aimantés 28 disposés en regard des extrémités des tiges 24 (figures 3 et 7).

Ces disques 28 complètent l'action du roulement 26. Les efforts de frottement de roulement pourraient en effet entraîner une rotation résiduelle du plateau 25. Les disques aimantés 28 sont attirés par les tiges 24 et bloquent cette rotation, réduisant ainsi les frottements relatifs entre les tiges 24 et les plateaux 25.

Par ailleurs, comme on le voit sur les figures 3 et 5, chaque plateau 25 sur lequel appuient les tiges de commande 24 est relié par des ressorts de rappel 19 (ressorts de traction) au boîtier 5a ou 5b portant l'hélice associée audit plateau. Ces ressorts 19 permettent d'éviter les rebonds éventuels des plateaux 25 sur les tiges 24. Ils plaquent les plateaux 25 sur les extrémités des tiges 24 et réduisent les vibrations. Les composants 25 et 26 sont également visibles sur la figure 7.

Le dispositif de commande de chaque tige 24 est constitué par un écrou 29 qui est monté pivotant relativement au châssis 5.

Comme on le voit à la figure 2, chaque boîtier 5a et 5b du châssis 5 comporte quatre alésages périphériques 30 dans lesquels sont montés pivotants les écrous 29. Le montage est fait sur de petits roulements 31. Il y a deux roulements 31 pour chaque tige 24, un roulement 31 positionné à chaque extrémité de l'écrou associé 29.

Chaque tige 24 porte un filetage et elle est freinée ou plutôt arrêtée en rotation par rapport au châssis 5 par au moins un méplat 43 qui coopère avec un trou 44 portant un plat (voir figure 2).

Selon une autre caractéristique de l'invention, les deux tiges 24 d'une même paire 23a ou 23b sont entraînées par une même motorisation 32a ou 32b. Comme on le voit à la figure 2, chaque motorisation associée à une paire de tiges est logée dans un support tubulaire 15 distinct.

Ainsi la motorisation 32a qui commande la paire de tiges 23a est logée dans le support tubulaire 15 du boîtier 5a, tandis que la motorisation 32b qui commande la paire de tiges 23b est disposée dans le support tubulaire 15 du boîtier 5b.

Des moyens mécaniques sont prévus pour qu'une seule et même motorisation 32a ou 32b fasse se translater les deux tiges de la même paire 23a ou 23b en sens inverse.

On pourra au choix :
- Mettre en œuvre des tiges 24 filetées dans le même sens et faire tourner les deux écrous associés 29 en sens inverse et à la même vitesse grâce à un jeu de pignons adapté ;
- Faire tourner les deux écrous associés 29 dans le même sens et à la même vitesse à l'aide d'un jeu de pignons adapté et les associer à des tiges 24 qui sont filetées en sens inverse.

Dans tous les cas les jeux de pignons associés aux deux paires de tiges 23a et 23b sont solidaires d'une même platine horlogère qui est formée par le fond 38a d'un premier boîtier 5a ou 5b (ici 5a) et qui porte des piliers 45 formant des axes pour les pignons (figure 9), piliers 45 qui sont destinés à pénétrer dans des trous 46 portés par le fond 38b du second boîtier (ici 5b).

Les deux jeux de pignons se trouvent ainsi disposés dans un logement 21 qui est délimité par les deux boîtiers 5a et 5b formant le châssis 5.

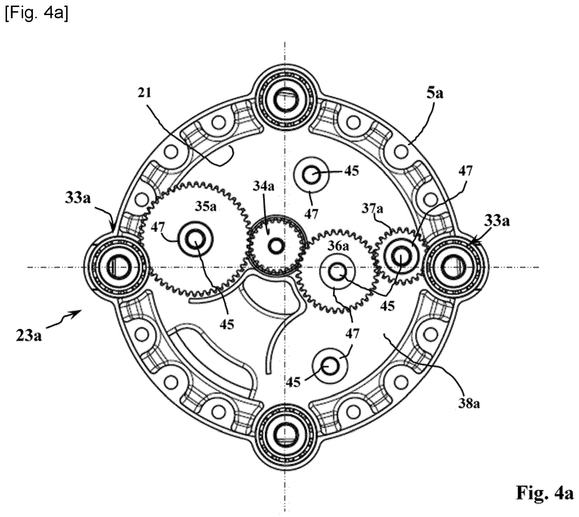

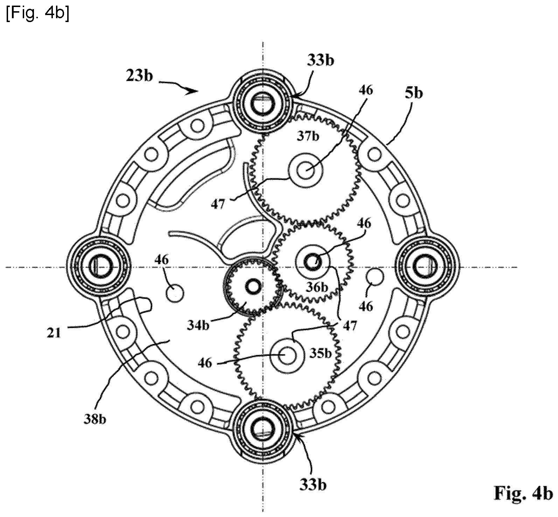

La figure 3 ainsi que les figures 4a et 4b permettent de mieux comprendre l'organisation des jeux de pignons.

La figure 4a montre en vue frontale le fond 38a du premier boîtier 5a sur lequel on a positionné uniquement un premier jeu de pignons assurant l'entraînement des tiges 24 de la première paire de tiges 23a. Ce premier jeu de pignons est entraîné par un pignon moteur 34a lié à l'axe de sortie de la motorisation 32a.

La figure 4b montre en vue frontale le fond 38b du second boîtier 5b sur lequel on a positionné uniquement un second jeu de pignons assurant l'entraînement des tiges 24 de la seconde paire de tiges 23b. Ce second jeu de pignons est entraîné par un pignon moteur 34b lié à l'axe de sortie de la motorisation 32b.

La figure 3 montre en perspective le second boîtier 5b par rapport auquel sont positionnés tous les pignons à l'exception du premier pignon moteur 34a.

Sur cette figure 3, on voit que chaque écrou 29 est solidaire d'un pignon récepteur 33 (respectivement 33a ou 33b selon la paire considérée).

Un pignon moteur 34a ou 34b est solidaire d'un arbre de sortie de la motorisation 32a ou 32b. Ces deux pignons moteurs 34a et 34b sont l'un au-dessus de l'autre sur la figure 2. On a également représenté à la figure 3 un des roulements 31 sur chaque écrou 29.

En considérant les figures 3 et 4a, on voit que le pignon 34a entraîne un des pignons récepteurs 33a par l'intermédiaire du pignon 35a et l'autre pignon récepteur 33a par l'intermédiaire de la série de deux pignons 36a et 37a. On remarque que les écrous 29 tourneront alors en sens inverse. Les filetages seront donc dans le même sens au niveau de chaque tige 24 de la paire 23a.

En considérant les figures 3 et 4b, on voit que le pignon 34b entraîne un des pignons récepteurs 33b par l'intermédiaire d'un pignon 35b et l'autre pignon récepteur 33b par l'intermédiaire des deux pignons 36b et 37b. On remarque que, là encore, les écrous 29 tournent en sens inverse. Les filetages seront donc dans le même sens au niveau de chaque tige 24 de la paire 23b.

Il est clair qu'en fonction des contraintes d'encombrement et de couple à transmettre, il sera possible de prévoir des pignons sur la platine horlogère 38a qui font tourner les écrous dans le même sens sur une paire.

On pourra même avoir une paire de tiges entraînées par des écrous tournant en sens inverse et une autre paire de tiges entraînées par des écrous tournant dans le même sens.

On remarque sur les figures 3, 4a et 4b que des disques 47 de matériau antifriction sont interposés entre les pignons qui sont empilés les uns sur les autres sur un même pilier 45 ainsi qu'entre les pignons et les fonds de boîtier 38a et 38b. On notera pour la compréhension des figures que les figures 4a et 4b montrent les fonds de chaque boîtier 5a ou 5b en vue frontale. Donc que, pour imaginer le positionnement relatif de tous les pignons sur un seul fond, un des deux boîtiers doit être retourné et il faut donc opérer une symétrie géométrique de l'une ou de l'autre figure par rapport à une ligne horizontale avant de superposer les figures.

Après une telle symétrie les pignons moteurs 34a et 34b sont superposés et coaxiaux ainsi que les pignons intermédiaires 36a et 36b. Cette superposition des pignons 36a et 36b est clairement visible sur la figure 3 (ainsi que sur la figure 2).

On constate donc que le dispositif de propulsion 1 selon l'invention est très compact, l'ensemble des moyens d'entraînement en rotation des rotors et des moyens de commande de l'inclinaison des rotors autour des axes de roulis et de tangage se situant entre les deux rotors.

Par ailleurs la commande de l'inclinaison des rotors par deux paires de tiges toutes deux motorisées assure une commande plus fiable que la solution selon l'art antérieur. Elle évite la latence mécanique lors de la commande, réduit les jeux et permet d'équilibrer les efforts entre les deux tiges d'une même paire. Il en résulte une commande tout à la fois simplifiée, plus fiable et plus robuste.

Ainsi, comme on peut le voir sur la figure 10, où l'on a représenté très schématiquement un aérodyne ou drone D dont le corps D1 est équipé du dispositif de propulsion 1, la hauteur totale du drone D n'est pas affectée par la présence du dispositif de propulsion 1. On peut donc augmenter la taille des pales sans pour autant augmenter obligatoirement la taille du reste de l'aérodyne, pour une furtivité à la fois visuelle et sonore.

Le dispositif de propulsion 1 selon l'invention permet de faciliter la maintenance et la réparation.

En effet, le simple démontage du châssis 5 par désolidarisation des deux boîtiers 5a et 5b donne accès à l'ensemble des pignons posés sur la platine horlogère 38a pour permettre par exemple le remplacement de pignons.

Chaque boîtier 5a ou 5b renferme son moteur couple 14 qui peut donc être remplacé aisément.

Enfin les supports tubulaires 15 délimitent chacun le logement d'un moteur de commande d'inclinaison 32a ou 32b qui peuvent également être démontés sans démonter le reste du dispositif.

On notera que les batteries d'alimentation électrique seront de préférence logées dans le drone D et reliées aux différents moteurs par des câbles non représentés. La traversée électrique du logement 21 entre les boîtiers 5a et 5b pourra être réalisée au moyen de contacts électriques à ressort bien connus de l'Homme du Métier, qui seront fixés à un des fonds de boîtiers.

Il est bien entendu que le mode de réalisation particulier qui vient d'être décrit a été donné à titre indicatif et non limitatif, et que des modifications peuvent être apportées.

## Revendications

1. Dispositif (1) de propulsion pour aérodyne à voilure tournante et à décollage et atterrissage verticaux, par hélices coaxiales et contrarotatives mobiles en lacet, roulis et tangage, le dispositif de propulsion comprenant :
- un châssis (5) creux et ayant un axe longitudinal qui, en utilisation, est coaxial à l'axe de lacet (A1),
- une hélice supérieure (2) et une hélice inférieure (3) ayant chacune un anneau porte-pales (6) à la périphérie duquel des pales (4) à pas fixe sont fixées, les hélices (2,3) étant espacées l'une au-dessus de l'autre selon l'axe de lacet (A1), chaque hélice définissant un disque d'hélice et étant apte à être entraînée en rotation autour d'un axe de rotation qui est perpendiculaire au disque d'hélice et à être inclinée autour de l'axe de roulis (A2) et de l'axe de tangage (A3),
- des moyens d'entraînement (14) pour entraîner en rotation chaque hélice (2,3) autour de son axe de rotation, et
- des moyens de commande d'inclinaison (22) pour incliner les hélices autour de l'axe de roulis (A2) et de l'axe de tangage (A3),
- l'anneau porte-pales (6) de chaque hélice étant relié aux moyens d'entraînement (14) par une liaison rotule à doigt (13), dont le centre est l'intersection du disque d'hélice respectif et de l'axe de lacet (A1) et dont l'axe est l'axe de rotation de l'hélice,
le dispositif de propulsion (1) étant ***caractérisé en ce que*** les moyens d'entraînement (14) comprennent des moyens moteurs comprenant, pour chaque hélice, un moteur couple (14) dont le rotor (14a) est solidaire d'une cage (10) sur laquelle est fixée la rotule (13) sur laquelle pivote l'anneau porte-pales (6) de l'hélice considérée, le stator (14b) du moteur couple (14) étant solidaire du châssis (5).

2. Dispositif de propulsion selon la revendication 1, **caractérisé en ce que** la cage (10) est montée rotative sur un support tubulaire (15) solidaire du châssis (5).

3. Dispositif de propulsion selon la revendication 2, **caractérisé en ce que** le châssis (5) est divisé en deux boîtiers (5a,5b) pouvant être assemblés l'un à l'autre, chaque boîtier étant associé à une hélice distincte, chaque boîtier (5a,5b) portant un stator (14b) d'un moteur couple (14) et un support tubulaire (15) sur lequel peut tourner une cage (10) entraînant une rotule à doigt (13) entraînant l'hélice associée audit boîtier.

4. Dispositif de propulsion selon une des revendications 1 à 3, **caractérisé en ce que** les moyens de commande d'inclinaison (22) comprennent :
- deux paires (23a,23b) de tiges de commande (24) de longueur fixe, qui sont situées entre les hélices, toutes les tiges (24) étant parallèles à l'axe de lacet (A1) et les deux tiges d'une même paire (23a,23b) étant disposées de façon diamétralement opposées l'une de l'autre par rapport à l'axe de lacet (A1),
- chaque tige (24) étant déplaçable en translation par un dispositif de commande, parallèlement à l'axe de lacet (A1), dans les deux sens, de façon à ce que chaque tige (24) soit apte à appuyer par une extrémité sur un plateau (25) qui est solidaire de l'anneau porte-pales (6) d'une hélice (2,3) de façon à le faire basculer autour de l'axe de roulis (A2) pour une première paire ou de l'axe de tangage (A3) pour une seconde paire,
- chaque plateau (25) étant relié à un anneau porte-pales (6) d'une hélice par un roulement (26) permettant de désolidariser en rotation le plateau (25) et l'anneau porte-pales (6) de l'hélice considérée.

5. Dispositif de propulsion selon la revendication 4, **caractérisé en ce que** le dispositif de commande de chaque tige (24) est constitué par un écrou (29) qui est monté pivotant relativement au châssis (5), la tige (24) portant un filetage et étant freinée ou arrêtée en rotation par rapport au châssis (5).

6. Dispositif de propulsion selon la revendication 5, **caractérisé en ce que** les deux tiges (24) d'une même paire (23a,23b) sont entraînées par une même motorisation (32a,32b) qui fait tourner les deux écrous (29) à la même vitesse grâce à un jeu de pignons, la rotation des deux écrous (29) pouvant être dans le même sens avec des tiges filetées en sens inverse ou la rotation des deux écrous (29) pouvant être en sens inverse avec des tiges filetées dans le même sens.

7. Dispositif de propulsion selon les revendications 3 et 6, **caractérisé en ce que** les jeux de pignons associés aux deux paires (23a,23b) de tiges (24) sont solidaires d'une même platine horlogère qui forme le fond (38a) d'un premier boîtier (5a) et porte des piliers (45) formant des axes pour les pignons, le fond (38b) du second boîtier (5b) portant des trous (46) recevant les piliers (45) du premier boîtier (5a), les deux jeux de pignons se trouvant ainsi disposés dans un logement (21) délimité par les deux boîtiers (5a,5b) formant le châssis (5).

8. Dispositif de propulsion selon la revendication 7, **caractérisé en ce que** les motorisations (32a,32b) associées aux deux paires (23a,23b) de tiges (24) sont logées chacune dans un support tubulaire (15) distinct associé à un des boîtiers (5a,5b).

9. Dispositif de propulsion selon les revendications 3 et 4, **caractérisé en ce que** chaque plateau (25) sur lequel appuient les tiges de commande (24) est relié par des ressorts de rappel (19) au boîtier (5a,5b) portant l'hélice associée audit plateau (25).

10. Aérodyne (D) à voilure tournante et à décollage et atterrissage verticaux, dont la propulsion est assurée par un dispositif de propulsion (1), **caractérisé par le fait que** le dispositif de propulsion (1) est tel que défini à l'une quelconque des revendications 1 à 9.

## Patentansprüche

1. - Antriebsvorrichtung (1) für ein Drehflügelflugzeug mit senkrechtem Start und senkrechter Landung durch koaxiale und gegenläufige Propeller, die an der Gier-, Roll- und Nickachse beweglich sind, wobei die Antriebsvorrichtung Folgendes umfasst:
- einen hohlen Rahmen (5) und aufweisend eine Längsachse, die bei Verwendung koaxial mit der Gierachse (A1) ist,
- einen oberen Propeller (2) und einen unteren Propeller (3), von denen jeder einen Schaufelträgerring (6) aufweist, an dessen Umfang Schaufeln (4) mit fester Blattneigung fixiert sind, wobei die Propeller (2, 3) übereinander gemäß der Gierachse (A1) beabstandet sind, wobei jeder Propeller eine Propellerscheibe definiert und ausgelegt ist, um um eine Drehachse in Rotation versetzt zu werden, die senkrecht zur Propellerscheibe ist, und um die Rollachse (A2) und die Nickachse (A3) geneigt zu sein,
- Antriebsmittel (14), um jeden Propeller (2, 3) um seine Drehachse in Rotation zu versetzen, und
- Mittel zur Steuerung der Neigung (22), um die Propeller um die Rollachse (A2) und die Nickachse (A3) zu neigen,
- wobei der Schaufelträgerring (6) jedes Propellers mit den Antriebsmitteln (14) durch eine (13) Kugelgelenk-Fingerverbindung verbunden ist, deren Zentrum die Schnittstelle der entsprechenden Propellerscheibe und der Gierachse (A1) ist, und deren Achse die Drehachse des Propellers ist,
wobei die Antriebsvorrichtung (1) **dadurch gekennzeichnet ist, dass** die Antriebsmittel (14) Motormittel umfassen, die für jeden Propeller ein Motorpaar (14) umfassen, dessen Rotor (14a) fest mit einem Kasten (10) verbunden ist, auf dem das Kugelgelenk (13) fixiert ist, auf dem der Schaufelträgerring (6) des betreffenden Propellers schwenkt, wobei der Stator (14b) des Motorpaars (14) fest mit dem Rahmen (5) verbunden ist.

2. - Antriebsvorrichtung nach Anspruch 1, **dadurch gekennzeichnet, dass** der Kasten (10) drehend auf einem rohrförmigen Träger (15) montiert ist, der fest mit dem Rahmen (5) verbunden ist.

3. - Antriebsvorrichtung nach Anspruch 2, **dadurch gekennzeichnet, dass** der Rahmen (5) in zwei Gehäuse (5a, 5b) unterteilt ist, die miteinander befestigt werden können, wobei jedes Gehäuse mit einem verschiedenen Propeller assoziiert ist, wobei jedes Gehäuse (5a, 5b) einen Stator (14b) eines Motorpaars (14) und einen rohrförmigen Träger (15) trägt, auf dem sich ein Kasten (10) drehen kann, wodurch ein Kugelgelenk mit Finger (13) angetrieben wird, wodurch der Propeller, der mit dem Gehäuse assoziiert ist, angetrieben wird.

4. - Antriebsvorrichtung nach einem der Ansprüche 1 bis 3, **dadurch gekennzeichnet, dass** die Mittel zur Steuerung der Neigung (22) Folgendes umfassen:
- zwei Paar (23a, 23b) Steuerstangen (24) mit fester Länge, die sich zwischen den Propellern befinden, wobei alle Stangen (24) parallel zur Gierachse (A1) sind und wobei die zwei Stangen eines gleichen Paars (23a, 23b) einander diametral entgegengesetzt mit Bezug auf die Gierachse (A1) angeordnet sind,
- wobei jede Stange (24) in Translation durch eine Steuervorrichtung parallel zur Gierachse (A1) in den zwei Richtungen verschoben werden kann, so dass jede Stange (24) dazu in der Lage ist, durch ein Ende auf eine Platte (25) zu drücken, die fest mit dem Schaufelträgerring (6) eines Propellers (2, 3) verbunden ist, um ihn um die Rollachse (A2) bei einem ersten Paar oder die Nickachse (A3) bei einem zweiten Paar schwenken zu lassen,
- jede Platte (25) mit einem Schaufelträgerring (6) eines Propellers durch ein Lager (26) verbunden ist, das ermöglicht, in Rotation die Platte (25) und den Schaufelträgerring (6) vom betreffenden Propeller zu lösen.

5. - Antriebsvorrichtung nach Anspruch 4, **dadurch gekennzeichnet, dass** die Steuervorrichtung jeder Stange (24) aus einer Schraubenmutter (29) besteht, die schwenkend mit Bezug auf den Rahmen (5) montiert ist, wobei die Stange (24) ein Gewinde trägt und in Rotation mit Bezug auf den Rahmen (5) gebremst oder gestoppt ist.

6. - Antriebsvorrichtung nach Anspruch 5, **dadurch gekennzeichnet, dass** die zwei Stangen (24) eines gleichen Paars (23a, 23b) durch eine gleiche Motorisierung (32a, 32b) angetrieben sind, die die zwei Schraubenmuttern (29) dank einem Satz von Ritzeln mit der gleichen Geschwindigkeit drehen lässt, wobei die Rotation der zwei Schraubenmuttern (29) in der gleichen Richtung sein kann, mit gewindegeschnittenen Stangen in umgekehrter Richtung, oder wobei die Rotation der zwei Schraubenmuttern (29) in umgekehrter Richtung sein kann, mit gewindegeschnittenen Stangen in der gleichen Richtung.

7. - Antriebsvorrichtung nach Anspruch 3 und 6, **dadurch gekennzeichnet, dass** die Sätze von Ritzeln, die mit den zwei Paaren (23a, 23b) von Stangen (24) assoziiert sind, mit einer gleichen Uhrenplatte fest verbunden sind, die den Boden (38a) eines ersten Gehäuses (5a) bildet und Säulen (45) trägt, die Achsen für die Ritzel bilden, wobei der Boden (38b) des zweiten Gehäuses (5b) Löcher (46) aufweist, die die Säulen (45) des ersten Gehäuses (5a) aufnehmen, wobei die zwei Sätze von Ritzeln somit in einer Aufnahme (21) angeordnet sind, die von den zwei Gehäusen (5a, 5b) begrenzt ist, die den Rahmen (5) bilden.

8. - Antriebsvorrichtung nach Anspruch 7, **dadurch gekennzeichnet, dass** die Motorisierungen (32a, 32b), die mit den zwei Paaren (23a, 23b) von Stangen (24) assoziiert sind, jeweils in einem verschiedenen rohrförmigen Träger (15) aufgenommen sind, der mit einem der Gehäuse (5a, 5b) assoziiert ist.

9. - Antriebsvorrichtung nach Anspruch 3 und 4, **dadurch gekennzeichnet, dass** jede Platte (25), auf die die Steuerstangen (24) drücken, über Rückstellfedern (19) mit dem Gehäuse (5a, 5b) verbunden ist, das den Propeller trägt, der mit der Platte (25) assoziiert ist.

10. - Drehflügelflugzeug (D) mit senkrechtem Start und senkrechter Landung, dessen Antrieb durch eine Antriebsvorrichtung (1) sichergestellt ist, **dadurch gekennzeichnet, dass** die Antriebsvorrichtung (1) wie in einem der Ansprüche 1 bis 9 definiert ist.

## Claims

1. - A propulsion device (1) for a vertical take-off and landing rotary-wing aerodyne, by means of coaxial contra-rotating propellers that can move in yaw, roll and pitch, the propulsion device including:
- a hollow frame (5) having a longitudinal axis which, in use, is coaxial with the yaw axis (A1),
- an upper propeller (2) and a lower propeller (3) each having a blade carrier ring (6) to the periphery of which fixed pitch blades (4) are secured, the propellers (2,3) being spaced one above the other along the yaw axis (A1), each propeller defining a propeller disc and being adapted to be driven in rotation about an axis of rotation that is perpendicular to the propeller disc and to be tilted about the roll axis (A2) and the pitch axis (A3),
- drive means (14) for driving in rotation each propeller (2,3) about its axis of rotation, and
- tilt control means (22) for tilting the propellers about the roll axis (A2) and the pitch axis (A3),
- the blade carrier ring (6) of each propeller being connected to the drive means (14) by a pin spherical joint (13) connection, the centre of which is the intersection of the respective propeller disc and the yaw axis (A1) and the axis of which is the axis of rotation of the propeller,
the propulsion device (1) being **characterised in that** the drive means (14) include motor means including, for each propeller, a torque motor (14), the rotor (14a) of which is secured to a cage (10) on which is secured the spherical joint (13) on which the blade carrier ring (6) of the respective propeller pivots, the stator (14b) of the torque motor (14) being secured to the frame (5).

2. - The propulsion device according to claim 1, **characterised in that** the cage (10) is rotatably mounted on a tubular support (15) secured to the frame (5).

3. - The propulsion device according to claim 2, **characterised in that** the frame (5) is divided into two cases (5a,5b) that can be assembled together, each case being associated with a separate propeller, each case (5a,5b) carrying a stator (14b) of a torque motor (14) and a tubular support (15) on which a cage (10) driving a pin spherical joint (13) driving the propeller associated with said case can rotate.

4. - The propulsion device according to any one of claims 1 to 3, **characterised in that** the tilt control means (22) include:
- two pairs (23a, 23b) of control rods (24), of fixed length, located between the propellers, all the rods (24) being parallel to the yaw axis (A1) and the two rods of the same pair (23a,23b) being arranged diametrically opposite each other relative to the yaw axis (A1),
- each rod (24) being movable in translation by a control device, parallel to the yaw axis (A1),in both directions, so that each rod (24) is able to push with one end on a plate (25) that is connected to the blade carrier ring (6) of a propeller (2, 3) so as to make it tilt about the roll axis (A2) for a first pair or about the pitch axis (A3) for a second pair,
- each plate (25) being connected to a blade carrier ring (6) of a propeller by a bearing (26) rotationally disengaging the plate (25) from the blade carrier ring (6) of the respective propeller.

5. - The propulsion device according to claim 4, **characterised in that** the control device of each rod (24) comprises a nut (29) which is pivotally mounted relative to the frame (5), the rod (24) carrying a thread and being braked or stopped in rotation relative to the frame (5).

6. - The propulsion device according to claim 5, **characterised in that** the two rods (24) of the same pair (23a, 23b) are driven by the same motorization (32a, 32b) which rotates the two nuts (29) at the same speed by means of a set of gearwheels, wherein the rotation of the two nuts (29) may be in the same direction with the rods being threaded in opposite directions or the rotation of the two nuts (29) may be in opposite directions with the rods being threaded in the same direction.

7. - The propulsion device according to claims 3 and 6, **characterised in that** the sets of gearwheels associated with the two pairs (23a, 23b) of rods (24) are secured to the same bottom plate which forms the bottom (38a) of a first case (5a) and carries pillars (45) forming pivot pins for the gearwheels, the bottom (38b) of the second case (5b) having holes (46) receiving the pillars (45) of the first case (5a), the two sets of gearwheels thus being located in a housing (21) delimited by the two cases (5a, 5b) constituting the frame (5).

8. - The propulsion device according to claim 7, **characterised in that** the motorizations (32a, 32b) associated with the two pairs (23a, 23b) of rods (24) are each housed in a separate tubular support (15) associated with one of the cases (5a, 5b).

9. - The propulsion device according to claims 3 and 4, **characterised in that** each plate (25) on which the control rods (24) bear is connected by return springs (19) to the case (5a, 5b) carrying the propeller associated with said plate (25).

10. - A vertical take-off and landing rotary-wing aerodyne (D), the propulsion of which is provided by a propulsion device (1), **characterised in that** the propulsion device (1) is as defined in any one of claims 1 to 9.
